# EUROPEAN PATENT APPLICATION

(11) **EP 4 631 403 A1**
(43) Date of publication of application: **15.10.2025**
(21) Application number: 25163771.6
(22) Date of filing: 14.03.2025
(51) Int. Cl.: A47J 31/40, A47J 43/27, A61J 1/20

(54) **DISPENSER FOR A MIXED DRINK**

(30) Priority: 20.03.2024 GB 202403954
(71) Applicant: Kingswell, Stuart, Pitstone Buckinghamshire LU7 9AU (GB)
(72) Inventor: Kingswell, Stuart, Pitstone Buckinghamshire LU7 9AU (GB)
(74) Representative: Abel & Imray LLP

(57) **Abstract**

A dispenser comprises a container 2 for liquid, and a chamber 12 for containing powder. The chamber is selectively slidable axially within a sleeve 8 within the container 2 between a sealed position, in which at least one aperture 14 in the chamber 12 is closed to retain the powder within the chamber, and a transfer position in which the at least one aperture 14 in the chamber 12 is opened to enable powder to flow out of the chamber. The chamber 12 is provided with a pushbutton 18 arranged to cause sliding of the chamber within the sleeve 8. The dispenser has a lid 20 including an outlet 22, and a passageway outside the sleeve 8 for liquid to flow from the container to the outlet 22. The lid 20 includes a sliding closure 30 for preventing actuation of the pushbutton 18 in a closed position thereof, and allowing actuation of the pushbutton in an open position of the sliding closure 30.

## Description

This invention relates to a dispenser for a mixed drink.

One application of the invention is for protein shakes, which are consumed by those taking exercise. During a workout, water is preferred for satisfying thirst and replacing lost fluid. After a workout, a protein shake is beneficial for replenishment of amino acids and muscle recovery and repair.

A protein shake is commonly prepared by mixing a proprietary protein powder with water. It is preferable to prepare the drink immediately before consumption, for better taste, digestibility, absorption, blend consistency, quality and freshness.

It is possible to provide a measured dose of powder in one container, and water in another. This requires both containers to be opened to combine the respective contents. This is time consuming, laborious, and risks contamination and spillage.

Accordingly, proposals exist for bottles including compartments for water and powder, with means for mixing the water and powder to prepare a protein shake.

US 2015/0250349 A1 describes a shaker bottle comprising a lower vessel for retaining water and an upper member including a liquid passage inlet and a storage chamber for powder including a releasable bottom member. When the bottom member seals the storage chamber, water can be drink through the liquid passage inlet. A releasable button member is used to release the bottom member, causing mixing of the water and powder, after which a mixed drink can pass through the liquid passage inlet.

KR 101791813 B1 describes a mixing container including a powder container that is depressed to open an aperture therein and release powder into a main body of the mixing container, where it can be mixed with water.

It is an aim of the invention to provide a dispenser having compartments for liquid and powder, the liquid being dispensable selectably by itself or mixed with the powder, wherein hygiene is improved and/or the action initiating mixing of the powder and liquid is more ergonomic than with the known containers.

The invention provides a dispenser comprising a container for liquid, and a chamber for containing powder, the chamber being selectively slidable axially within a sleeve within the container between a sealed position, in which at least one aperture in the chamber is closed to retain the powder within the chamber, and a transfer position in which the at least one aperture in the chamber is opened to enable powder to flow out of the chamber, the chamber being provided with a pushbutton arranged to cause sliding of the chamber within the sleeve, the dispenser having a lid including an outlet, and a passageway outside the sleeve for liquid to flow from the container to the outlet, the lid including a sliding closure for preventing actuation of the pushbutton in a closed position thereof, and allowing actuation of the pushbutton in an open position of the sliding member.

In an embodiment of the invention, the sleeve is removable from the dispenser, the sleeve and the chamber together forming a container for the powder.

The pushbutton may be provided on a lid of the chamber.

The sleeve may include a collar for spacing the sleeve from an internal wall of the container, the collar including at least one aperture, for example apertures of a grid, providing the passageway for liquid.

The sliding closure may include an aperture through which the pushbutton can be actuated in the open position of the sliding member.

The invention will now be described in more detail, by way of example only, with reference to the accompany drawing, in which:
Figure 1 is an exploded view of a dispenser according to an embodiment of the invention;
Figure 2 shows the powder container assembled from the chamber and sleeve of Figure 1;
Figure 3 shows the powder container of Figure 2 with the chamber lid;
Figure 4 shows the powder container of Figure 3 with the dispenser lid in place;
Figure 5 shows the assembled dispenser, with the sliding member in the closed position;
Figure 6 is a cut away view showing the dispenser discharging unmixed liquid;
Figure 7 shows the assembled dispenser, with the sliding member in the open position; and
Figure 8 is a cut away view showing the dispenser discharging mixed liquid.

### Detailed Description of Particular Embodiments

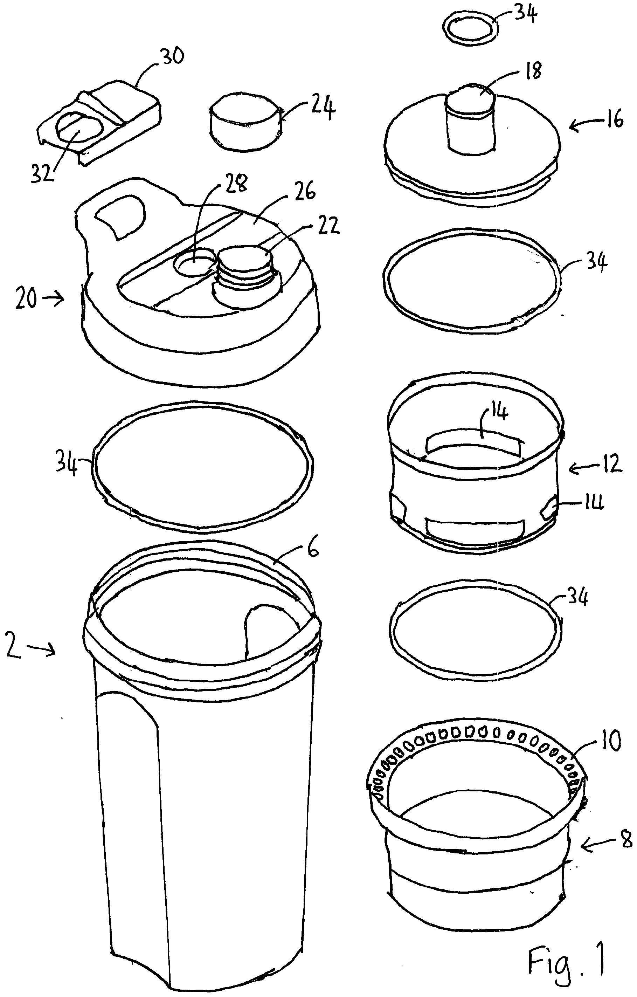

Figure 1 shows components of a dispenser. A generally cylindrical container 2 has a screw thread 6 at its mouth.

A sleeve 8 includes a collar 10 in the form of a grid with a multiplicity of apertures. The sleeve 8 is sized to fit within an upper part of the container 2.

A powder chamber 12 is generally cylindrical and open at its upper end. Arcuate apertures 14 are provided near the bottom of the cylindrical wall of the powder chamber.

A chamber lid 16 is disc-shaped and has a central pushbutton member 18 extending upwardly.

A container lid 20 is configured to fit over the mouth of the container 2 and to screw thereto via an internal thread (not shown) on the lid 20 which engages with the screw thread 6 of the container 2. The container lid has a screw threaded mouthpiece 22 closable by a screw cap 24.

A channel 26 of the container lid 20 has a central through-hole 28. A sliding member 30 is engageable with the channel 26 such that the member 30 is retained on the lid 20 but can slide back and forth along the channel 26. The member 30 has an aperture 32.

Seals 34 of different sizes are provided to seal the various parts of the dispenser.

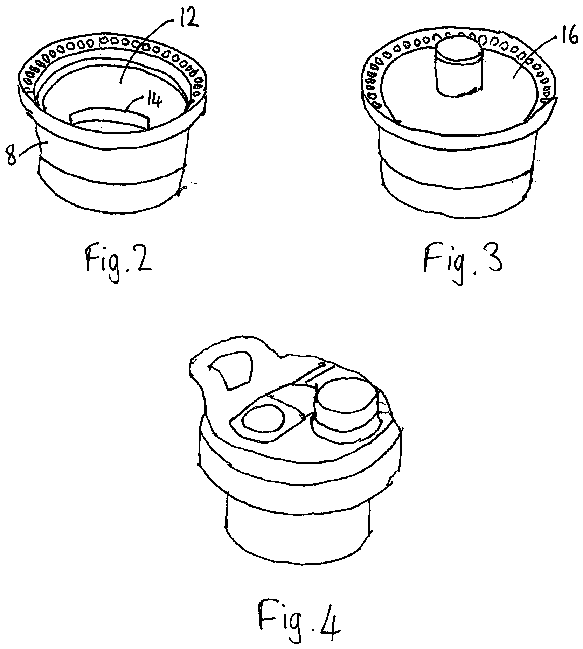

Figure 2 shows the powder container formed by the powder chamber 12 fitted inside the sleeve 8. These two components snap together with the base of the powder chamber 12 at the bottom of the sleeve 8. In this position, the cylindrical wall of the sleeve 8 closes the apertures 14 of the powder chamber 12. This powder container is filled with powder intended to prepare a drink, such a protein powder.

Subsequently, the chamber lid 16 is snapped into place at the top of the powder chamber 12. The closed powder container is then as shown in Figure 3.

As shown in Figure 4, the container lid 20 is placed onto the powder container in frictional engagement therewith.

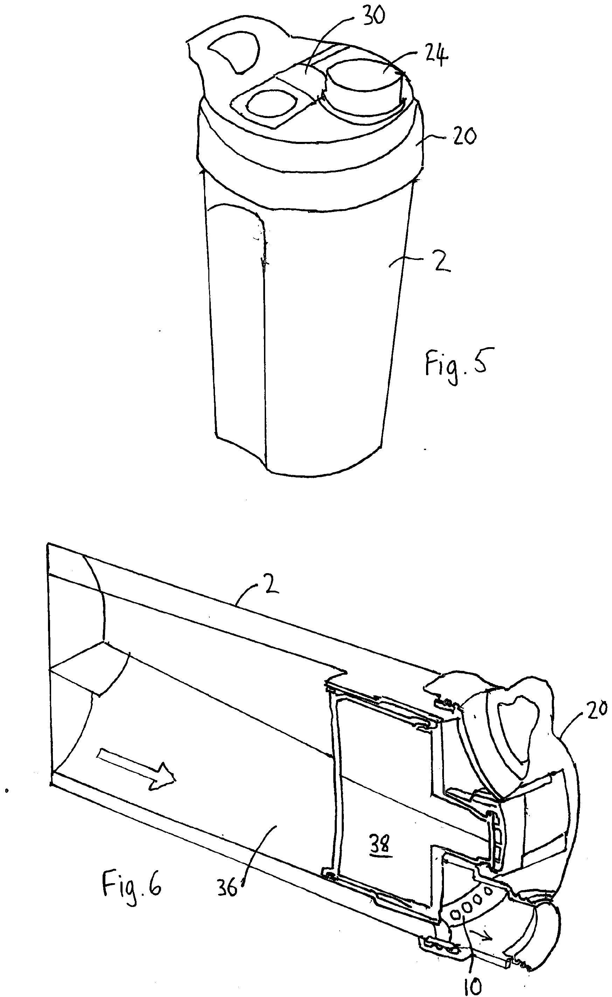

The container lid 20, with the powder container attached thereto, can now be screwed to the container 2. The dispenser is then as shown in Figure 5. The sliding member 30 obscures the pushbutton member 18. The screw cap 24 can now be removed, the container body can be filled with a liquid, such as water, through the mouthpiece 22, and the screw cap 24 replaced.

As shown in Figure 6, with the screw cap 24 removed, tipping the dispenser will cause the liquid 36 to flow in the direction of the arrows, around the powder container, the apertures 14 of which remain sealed. The powder 38 remains dry. The liquid flows through the grid of the collar 10. The unmixed liquid can thus be drunk vis the mouthpiece 22.

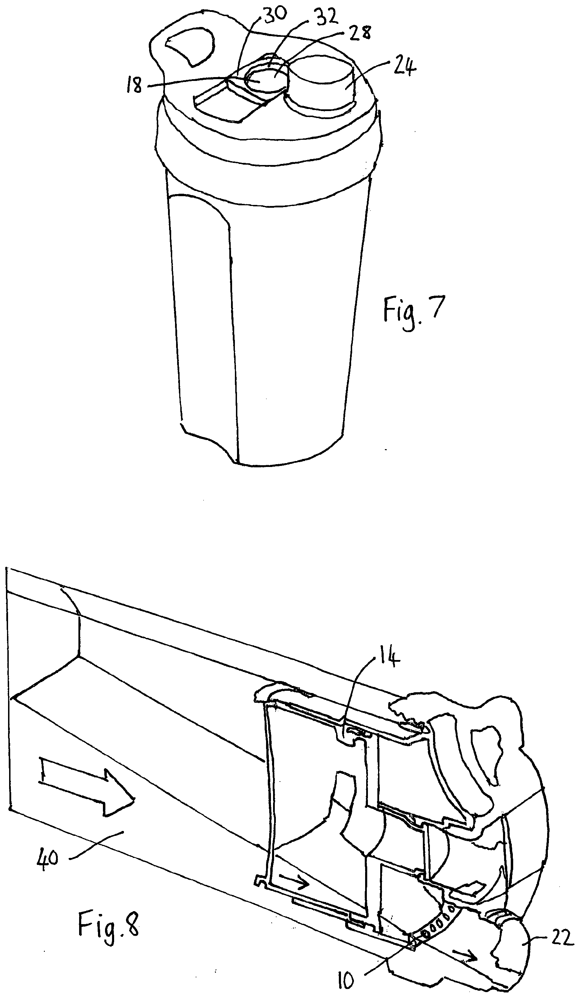

To mix the powder with the liquid, with the screw cap 24 in place, firstly the sliding member 30 is slid to the position shown in Figure 7. The aperture 32 of the sliding member 30 aligns with the through-hole 28 to expose the pushbutton member 18. The pushbutton member is then pressed, causing the powder chamber 12 to slide within the sleeve 8 until the apertures 14 are beyond the wall of the sleeve 8. This places the powder chamber 12 in fluid communication with the main body of the container 2. The dispenser is shaken, and the powder mixes with the liquid to form a prepared drink. Notably, these actions can be performed one-handed, by the hand holding the dispenser, the thumb of that hand sliding the sliding member 30 and depressing the pushbutton member 18.

As shown in Figure 8, tipping the container in this configuration causes the mixed drink 40 to flow through in the direction of the arrows, for drinking through the mouthpiece 22. As the drink flows through the grid of the collar 10, any clumps of powder are broken down, improving mixing.

When used with a protein powder, the dispenser of the invention ensures the powder is consumed in its optimum condition. The invention provides a hygienic and ergonomic dispenser both for an unmixed liquid, and a drink prepared by mixing that liquid with a powder stored in the dispenser.

## Claims

1. A dispenser comprising a container (2) for liquid, and a chamber (12) for containing powder, the chamber being selectively slidable axially within a sleeve (8) within the container between a sealed position, in which at least one aperture (14) in the chamber (2) is closed to retain the powder within the chamber, and a transfer position in which the at least one aperture (14) in the chamber (2) is opened to enable powder to flow out of the chamber, the chamber (2) being provided with a pushbutton (18) arranged to cause sliding of the chamber within the sleeve (8), the dispenser having a lid (20) including an outlet (22), and a passageway outside the sleeve (8) for liquid to flow from the container (2) to the outlet (22), the lid (20) including a sliding closure (30) for preventing actuation of the pushbutton (18) in a closed position thereof, and allowing actuation of the pushbutton in an open position of the sliding closure (30).

2. The dispenser of claim 1, wherein the sleeve (8) is removable from the dispenser, the sleeve (8) and the chamber (12) together forming a container for the powder.

3. The dispenser of claim 1, wherein the pushbutton (18) is provided on a lid (16) of the chamber (12).

4. The dispenser of claim 1, wherein the sleeve (8) includes a collar (10) for spacing the sleeve from an internal wall of the container (2), the collar including at least one aperture providing the passageway for liquid.

5. The dispenser of claim 4, wherein the at least one aperture comprises a plurality of apertures of a grid.

6. The dispenser of claim 1, wherein the sliding closure (30) includes an aperture (32) through which the pushbutton (18) can be actuated in the open position of the sliding closure (30).
